Europäisches Patentamt

European Patent Office

Office européen des brevets

(11) Publication number: **0 181 108**
**B1**

## EUROPEAN PATENT SPECIFICATION

(45) Date of publication of patent specification: **19.12.90**

(51) Int. Cl.⁵: **B 01 J 38/30, C 10 G 11/18**

(21) Application number: **85307518.2**

(22) Date of filing: **17.10.85**

(54) **Oxidation process and apparatus.**

(30) Priority: **09.11.84 GB 8428395**

(43) Date of publication of application:
**14.05.86 Bulletin 86/20**

(45) Publication of the grant of the patent:
**19.12.90 Bulletin 90/51**

(84) Designated Contracting States:
**BE DE FR NL**

(56) References cited:
**EP-A-0 060 050**
**US-A-4 035 153**

(73) Proprietor: **The BOC Group plc**
**Hammersmith House**
**London W6 9DX (GB)**

(72) Inventor: **Watson, Richard William**
**1 Woodlands Grove**
**Ilkley West Yorkshire, LS29 9BX (GB)**

(74) Representative: **Wickham, Michael et al**
**c/o Patent and Trademark Department The BOC**
**Group plc Chertsey Road**
**Windlesham Surrey GU20 6HJ (GB)**

Courier Press, Leamington Spa, England.

## Description

The present invention relates to an oxidation process and apparatus. In particular, it relates to a process and apparatus for the oxidative regeneration of a coke-contaminated catalyst, particularly one used in the fluidised bed catalytic cracking of hydrocarbons.

The fluid catalytic cracking of a hydrocarbon feedstock is an important oil refinery operation for producing petrol (gasoline) and other relatively light hydrocarbon products from heavier hydrocarbons such as vacuum gas oil. The process typically comprises contacting the preheated feedstock with a cracking catalyst under cracking conditions to produce cracked hydrocarbon vapours. Coke (i.e. very heavy hydrocarbon deposits typically including 7% by weight of hydrogen) is deposited on the catalyst during the cracking reaction. The effect of this deposition is to reduce the activity of the catalyst. It is therefore necessary to regenerate the catalyst. The cracked hydrocarbon vapours are separated from the coke-contaminated catalyst and recovered as product essentially free from entrained catalyst. Volatile hydrocarbons are stripped from the spent catalyst by contact with stripping vapours in a striping zone. The resulting catalyst is then regenerated in a fluidised bed by burning the coke that adheres to its surfaces. Air is supplied to the regenerator so as to provide the necessary oxygen for the regeneration. The conditions that are employed in the regenerator are such that most and preferably substantially all of the coke is removed by oxidation from the surface of the catalyst. The regenerated catalyst is withdrawn from the regenerator and returned to the reactor. There is thus continuous circulation of spent catalyst from the reactor to the regenerator and regenerated catalyst from the regenerator to the reactor. Simultaneously, the hydrocarbon feedstock is continuously fed into the reactor.

Typically, the regenerator comprises a large, vertical, cylindrical vessel in which the coke-contaminated catalyst is maintained in a fluidised state by the upward passage therethrough of air. The fluidised catalyst forms a dense phase of a fluidised bed in a lower portion of the vessel and a dilute phase in an upper portion of the vessel. In order to minimise loss of catalyst by elutriation, the flue gas from the dilute phase passes through cyclone separation means located in the regenerator vessel so as to extract suspended catalyst from the flue gas. Tyipcally, there are several cyclones in the regenerator, each cyclone comprising one or more stages. The cyclones return the separated catalyst to the dense phase of the bed and pass the flue gas out of the regenerator.

The air that fluidises the bed also serves the purpose of supporting combustion of the coke that adheres to the particles of catalyst. It is typically supplied to the regenerator vessel through one or more distributor pipes located in the dense phase of the fluidised bed. In one kind of fluid catalytic cracking plant, the regenerator employs a single main annular distributor with air distributing nozzles facing upwardly and/or downwardly. In another kind of fluid catalytic cracking plant separate arcuate distributors are employed, and are typically arranged so that they all lie on the same annulus. One example of the present invention is particularly concerned with the operation of regenerators of this type. In addition to the main air distributors, there may be an inner distributor or distributors for distributing air to the centre of the dense phase of the fluidised bed to ensure that no slumping of the bed takes place in the central region. Typically, this air amounts to about 5—15% by volume of that supplied to the main air distributors.

Whereas the catalytic cracking process is an endothermic one, the oxidation of the coke contaminant on the catalyst is an exothermic process. Accordingly, fluid catalytic cracking plant is designed so that the heat generated in the regenerator is employed in the reactor.

Relatively hot catalyst is fed back into the reactor from the regenerator to effect this transfer of heat. Typically the catalyst will pass into the reactor vessel via a riser or transfer line. It is to be appreciated that in some plant the catalytic cracking reaction takes place predominantly in the riser and is completed in the reactor vessel. In practice, the burning of the coke is able to satisfy all the heat requirements of the catalytic cracking unit, although if desired additional preheating of the feedstock may be provided as well by means of a separately fired preheater. The arrangement is such that there is always a heat balance between the regenerator and the reactor.

Installation of fluid catalytic cracking plant requires a major capital investment and, accordingly, it is expected that the plant once installed will be operated over more than one decade. During such a period, varying demands are likely to be placed on the plant. For example, in recent years, there has been a demand for the plant to crack increasingly heavy feedstocks. This is in effect a requirement for the plant to be uprated.

In practice, there are limitations to the freedom that the operator has to operate a plant either in terms of the carbon content of the feedstock being processed or the amount of feedstock being processed per unit time (or both). Suppose the rate of throughput of feedstock is increased. This increases the amount of coke that is formed on a catalyst. Without passing any additional air through the regenerator to burn off this additional coke there is a loss of activity of the catalyst which leads to a substantial fall in the percentage conversion achieved in the reactor. It can be appreciated that extra air can be supplied to the regenerator so as to burn off the additional carbon on the catalyst and thus provide extra heat as well, but there comes a point when a limitation on the amount of air passed through the regenerator is reached. Typically, a common air main is used to supply all the air requirements of the regenerator. This main may be supplied with air from one or more blowers. Therefore, the case sometimes arises that the maximum output of the blower or blowers is reached. Another limitation that can arise in practice is that the maximum fluidising velocity through the bed may be reached above which an excessive and undesirable amount of elutriation of catalyst from the dense phase of the bed occurs.

EP—A—60 050 discloses that in a fluid catalytic cracking process, the regeneration temperature can be eliminated as an operating constraint, and the amount of residual carbon on the regenerated catalyst can be reduced by increasing the oxygen content of the regeneration catalyst and cooling the catalyst to maintain the regeneration temperature.

The present invention is particularly concerned with two other kinds of limitation that arise. First, where the regenerator is of the aforesaid kind which has a plurality of distributors for introducing combustion air from a common air main into the dense phase of the fluidised bed, there is a need to "balance" the air flows to each distributor so as to maintain uniform combustion conditions throughout the dense phase. A balancing valve is provided for each main distributor of combustion air. This enables the air supplied by each such distributor through the bed to be balanced with the air supplied from the other distributors so as to maintain uniform combustion throughout the bed. However, there comes a point where in order to supply all the necessary air for combustion the balancing valves need to be fully opened. The problem can then arise that while the limitation on maximum blower output or on maximum fluidising velocity may not be reached, non-uniform combustion conditions in the dense phase can then be created. This problem may be example be caused by differences in pressure drops as the air passes from the common main to the respective distributors. A contributory factor albeit, probably minor, may be carry-over of hydrocarbons in the catalyst return pipe that terminates in the dense phase of the fluidised bed. There is thus a maximum rate at which the air can be provided, above which non-uniform combustion conditions will be created in the bed, these conditions manifesting themselves in someloss of catalyst activity as a result of some regenerated catalyst having higher than specified residual carbon levels. It also manifests itself in an increase in the proportion of carbon monoxide in the flue gas entering some but not all of the cyclones. This can give rise to uneven temperature rises in the respective cyclones as the flue gas is subjected to after burning, so much so that in some cyclones a temperature rise in the order of 50°C can occur. This can cause the catalyst in the cyclones to be heated to a temperature at which it begins to lose its activity permanently. Another problem that can arise is that when the requirements for combustion air become a maximum in the regenerator, inadequate air may be supplied to a so-called secondary or "fluffing air" distributor or distributors that supply air to the centre of the bed and that non-uniform combustion of the coke or slumping of the bed can occur at the centre of the dense phase.

US—A—4 035 153 discloses a catalyst regeneration process in which trim gas is supplied separately below the fluidised dense phase bed so as to cure oxygen deficiency in that bed which may arise notwithstanding the supply of primary regeneration gas.

It is an aim of the present invention to provide a process and apparatus where oxygen or oxygen enriched air may be used to facilitate the maintenance of uniform combustion conditions within the dense phase of catalyst in a fluidised bed catalyst regenerator.

According to the present invention there is provided a process for the regeneration of coke-contaminated catalyst, comprising:

(a) supplying the coke-contaminated catalyst to elevated temperature fluidised catalyst undergoing regeneration, said catalyst being dispersed in a relatively dense phase and a relatively dilute phase, and said coke-contaminated catalyst being supplied to the said dense phase;

(b) withdrawing regenerated catalyst from the dense phase;

(c) passing air from a common main to a plurality of conduits to form a plurality of air streams, free of catalyst, and distributing the air streams to the said relatively dense phase so as to maintain the fluidisation of the catalyst and to supply oxygen for supporting combustion of said coke;

(d) enriching at least one of the said air streams in oxygen; and

(e) controlling the rate of supply of each said air stream to said relatively dense phase, and controlling the concentration of oxygen in the oxygen-enriched air stream or in at least one of the oxygen-enriched air streams independently of the other oxygen-enriched air streams.

The invention also provides apparatus for the regeneration of a coke-contaminated catalyst, comprising:

(a) a regenerator vessel;

(b) a common main for passing air to a plurality of air conduits (each of which conduits ends inside the regenerator) distributing air to fluidised catalyst to maintain in a fluidised state a relatively dense phase of the catalyst and a relatively dilute phase of the catalyst;

(c) means for feeding coke-contaminated catalyst to said relatively dense phase;

(d) means for withdrawing regenerated catalyst from said relatively dense phase;

(e) means for passing oxygen or oxygen-enriched air into at least one of the air conduits; and

(f) means for controlling the rate of supply of air from each of said air supply conduits to said relatively dense phase, and means for controlling the rate of passage of oxygen or oxygen-enriched air into at least one of the air conduits independently of the control of any oxygen or oxygen-enriched air passed into any of the other air conduits.

The process and apparatus according to the present invention makes it possible to control the supply of air and oxygen (or oxygen-enriched air) to the dense phase of a fluidised bed of the catalyst so as to maintain uniform combustion conditions throughout. Such uniform combustion conditions manifest themselves in relatively even temperature rises in each cyclone separator means and in relatively uniform gas compositions in the flue gas entering and leaving such cyclone separators. They also manifest themselves in relatively uniform gas compositions in the flue gas entering and leaving such cyclone separators. They also manifest themselves in relatively uniform residual carbon levels on the catalyst returned to the reactor. In one example of the process and apparatus according to the present invention, there are two or more primary air supply conduits each ending in its own main distributor of air, at least one subsidiary air conduit ending in its own distributor, and means are provided for supplying oxygen or oxygen-enriched air to each such distributor, via its primary air conduit, each such means having a control valve associated with it such that the rate at which oxygen or oxygen-enriched air is supplied to any one primary air supply conduit and hence main distributor can be set at a different rate from that at which oxygen or oxygen-enriched air is supplied to the other main distributor or distributors. Typically, it will not be necessary to supply oxygen or oxygen-enriched air to each such main distributor. It may well be found that without the addition of oxygen there is a tendency for an excess of air to be supplied to one of the main distributors when its balancing valve (i.e. the balancing valve associated with the respective primary air distributor) is fully open simultaneously with a deficiency of air to at least one other distributor when its balancing valve is fully open. In such a situation, supply of oxygen-enriched air or oxygen to the latter of these distributors enables the desired degree of combustion of coke to take place in the vicinity of the distributor and at the same time enables an adjustment of the balancing valve of the former distributor to be made so as to reduce the amount of air supplied thereto without creating non-uniform conditions in the bed and without there being an overall deficiency of combustion supporting gas supplied to the bed. The process and apparatus according to the present invention in such an example makes it possible to achieve a greater uprating of the catalytic cracking plant than would otherwise be possible. Moreover, oxygen supply means can be fitted without the need to shut down the plant for prolonged periods.

In the above mentioned example, each distributor to which oxygen or oxygen-enriched air is supplied may typically receive such gas at such a rate that the air also supplied thereto is enriched in oxygen by up to 6% in volume. If desired, operation of the control valves associated with the oxygen or oxygen-enriched air supply means may be effected automatically. The controlling parameter may for example be the temperature of the flue gas leaving the cyclone separators associated with each main distributor, or the composition of the gas leaving such separators, for example, its oxygen or carbon monoxide concentration. It should be noted however that the control means must always take account of the maximum permissible oxygen concentration at any point in the plant. In the above mentioned example of the process and apparatus according to the present invention, the oxygen or oxygen-enriched air may beneficially be applied to an existing fluid catalytic cracking plant, which the regenerator is intended to produce regenerated catalyst with 0.1% by weight or less of residual coke (such a plant is often referred to as a "total burn" plant).

Apart from the advantages mentioned herein above, the addition of oxygen or oxygen-enriched air may also help to eliminate any problem with excessive temperature rises being created in the cyclone separators. Moreover, if there is a tendency for the proportion of the carbon that is burnt off in the regenerator to be limited by kinetic factors, the use of oxygen or oxygen enriched air to increase the partial pressure of oxygen in the reactor will help to increase the percentage of carbon that is burnt off in a given time in the regenerator.

Generally, the regenerator will be operated with distinct dense and dilute phases with an interface therebetween. In at least one known kind of regeneration plant there are two separate dilute phases, the lower being relatively more dense than the upper.

In another example of the process and apparatus according to the present invention, where a problem arises in obtaining adequate combustion in an inner or central region of the dense phase of the bed once it has been decided to uprate the plant beyond a limiting point, addition of oxygen or oxygen-enriched air to the central air distributor or distributors at a controlled rate will help to solve or ameliorate the problem. In this example there is no need to supply any oxygen or oxygen-enriched air to the main air distributors. Typically 5—15% of the total air supplied to the bed is supplied through the central air distributor(s). A need for such oxygen enrichment may typically arise in relatively old fluid catalyst cracking plants operating with a residual carbon levels on the regenerated catalyst greater than 0.05% by weight.

The process and apparatus according to the present invention will now be described by way of example with reference to the accompanying drawings, in which,

Figure 1 is a schematic diagram showing a regenerator of a first fluidised bed catalytic cracking plant, and

Figure 2 is a schematic section through the line II-II in Figure 1:

Figure 3 is a schematic section or elevation illustrating the regenerator of a second fluidised bed catalytic cracking plant, and

Figure 4 is a schematic section through the line IV-IV in Figure 3.

The drawings are not to scale.

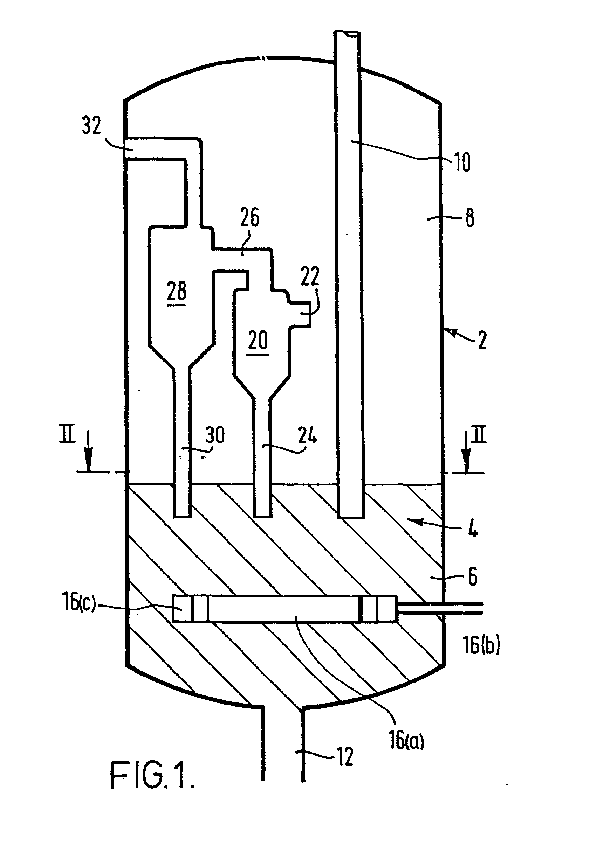

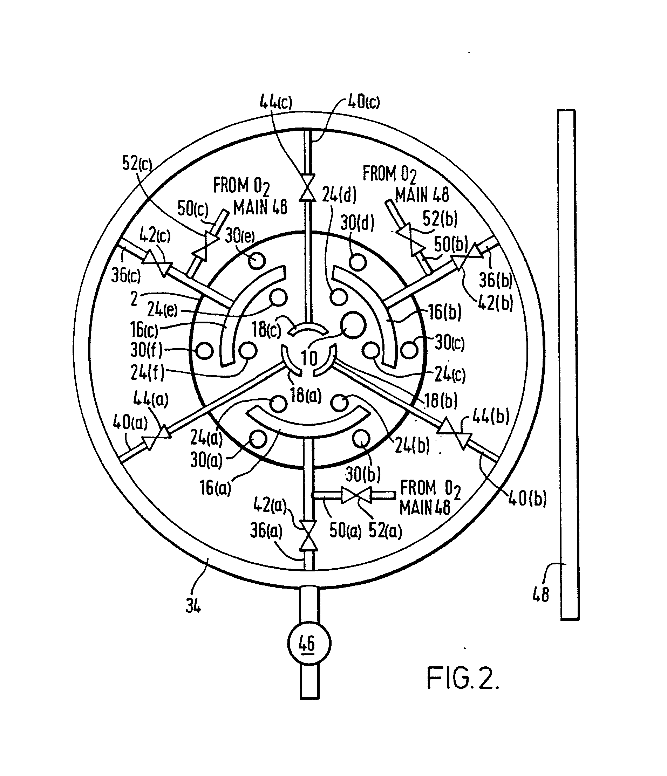

Referring to Figures 1 and 2 of the accompanying drawings, a regenerator vessel 2 is adapted to operate at pressures above atmospheric and has in it a fluidised bed 4 of catalyst undergoing regeneration. The fluidised bed 4 comprises a lower dense phase 6 of catalyst undergoing regeneration and an upper dilute phase 8 of such catalyst. There is a downwardly extending pipe 10 through which catalyst for regeneration is fed from a reactor (not shown) of a fluidised bed catalytic cracker. The reactor is situated vertically above the regenerator 2. At the bottom of the regenerator vessel 2 is an outlet 12 for regenerated catalyst. For the purposes of simplicity of illustration the necessary catalyst flow control valves in the pipe 10 and outlet 12 are not shown. In practice, these valves will be open to extents such that the rate of infeed of catalyst into the regenerator 2 will equal the rate at which regenerated catalyst is withdrawn or extracted therefrom.

Three arcuate main air distributors 16(a), 16(b) and 16(c) are located in the dense phase 6 of the fluidised bed 4. As shown in Figure 2, the main air distributors 16 are located substantially in the same plane and are juxtaposed such that they all lie on the same annulus. Each distributor 16 has nozzles (not shown) pointing upwardly and/or downwardly so as to ensure a uniform distribution of air throughout the dense phase 6 of the fluidised bed 4. Located within the annulus on which the three main air distributors 16 lie are three arcuate secondary air distributors 18(a), 18(b) and 18(c). The distributors 18 all lie on the same annulus as each other, which annulus is coaxial with the annulus on which the distributor 16 lies (although this is not essential). The distributors 18 have air distribution nozzles (not shown) pointing upwardly and/or downwardly so as to facilitate uniform fluidisation of the bed in its central region.

The regenerator vessel 2 is also provided with means for extracting catalyst from the flue gas so as to minimise the quantity of catalyst which is carried out of the regenerator 2 with such flue gas. This means includes six primary cyclones 20(a) to 20(f). Only one of these cyclones is illustrated in Figure 1 of the accompanying drawings, for purposes of ease of illustration. Each cyclone 20 has a downcomer 24 through which catalyst separated from the gas entering the cyclones 20 is returned to the dense phase 6 of the fluidised bed 4. The cyclones 20 all have outlets 26 each of which leads to a respective secondary cyclone 28. There are thus six secondary cyclones 28(a) to 28(f), of which for ease of illustration only one is shown in Figure 1. The purpose of the secondary cyclones 28(a) to 28(f) is to complete the separation of catalyst from the gas that is discharged from the regenerator.

Each secondary cyclone 28 has a downcomer 30 from which catalyst is returned to the dense phase 6 of the fluidised bed 4 and an outlet 32 for gas substantially free of catalyst. Each outlet 32 communicates with a stack (not shown) through which waste gas can be discharged from process.

In order to supply air to the distributors 16 and 18 for the purposes of maintaining fluidisation of the catalyst and supporting combustion of the coke adhering to the surface of the catalyst, there is an air main 34 that communicates with an air blower 46. The air main 34 also communicates with three primary air supply conduits 36(a), 36(b) and 36(c) each of which terminates in a respective main air distributor 16. Balancing valves 42(a), 42(b) and 42(c) are located in the air supply conduits 36(a), 36(b) and 36(c) respectively. The air main 34 also communicates with three secondary air supply conduits 40(a), 40(b) and 40(c), each of which in turn communicates with a respective one of the air distributors 18(a), 18(b) and 18(c). Balancing valves 44(a), 44(b) and 44(c) are located in the conduits 40(a), 40(b) and 40(c) respectively. The balancing vlaves 42 and 44 are all operable to facilitate the achievement of a uniform air distribution throughout the dense phase of the fluidised bed and hence a uniform combustion of the coke adhering to the surface of the contaminated catalyst particles.

The apparatus shown in Figures 1 and 2 also includes an oxygen supply main 48 communicating with a source of commerically pure oxygen (not shown). This source can comprise a plant for separating oxygen and air, or one or more thermally-insulated storage vessels that hold oxygen in its liquid state and that are fitted with vaporisers so as to vaporise the oxygen and supply gaseous oxygen to the main 48. Three oxygen supply conduits 50(a), 50(b) and 50(c) extend from the oxygen supply main 48 and terminate respectively in the air supply conduits 36(a), 36(b), and 36(c) at respective regions downstream of the balancing valves 42. Flow control valves 52(a), 52(b) and 52(c) are located in the oxygen supply conduits 50(a), 50(b) and 50(c) respectively. The valves 52 are operable so as to enable different oxygen flow rates from the three air supply conduits 36 to be set.

In operation of the apparatus shown in Figures 1 and 2, a fluidised bed of coke-contaminated catalyst to be regenerated is established in the regenerator vessel 2. As described above, the fluidised bed 4 has a dense phase 6 and a dilute phase 8. Air is supplied to the bed from the blower 46 via the distributors 16 and 18. Hot coke-contaminated catalyst typically at a temperature in the range 450—500°C is fed from the hydrocarbon stripper (not shown) of the fluidised bed catalytic cracking reactor (not shown) to the pipe 10 and thus flows down this pipe into the dense phase 6 of the fluidised bed 4. The exit from this pipe 10 is positioned well away from the distributors 16 and 18 so as to prevent any common interference between the air issuing from the distributors 16 and 18 and the catalyst issuing from the pipe 10. During steady state operation of the regenerator 2 the coke on the surface of the contaminated catalyst particles is oxidised by reaction with the oxygen in the air supplied to the dense phase 6 of the fluidised bed 4 from the distributors 16 and 18. A mixture of carbon monoxide, carbon dioxide and water vapour is thus formed. The proportions of carbon monoxide and carbon dioxide in the mixture depends on the conditions under which the fluidised bed 4 is operated. These conditions will include the amount of excess air that is supplied, the temperature of the bed, the average residence time of the catalyst particles in the bed and the amount of coke deposited on the catalyst during the cracking process, amongst other factors. Typically conditions are arranged so as to give substantially a "total burn" of coke. (Operation of plant such as that shown in Figures 1 and 2 in order to achieve such total burn is generally well known and will not be described in detail hereinafter save as is necessary for the purposes of further illustrating the invention). This means that the regenerated coke returned to the catalytic cracking reactor has no more than 0.10% and preferably no more than 0.05% by weight of residual coke. Moreover, as the term "total burn" implies, the proportion of carbon monoxide in the gaseous phase at the interface of the dense phase 6 of the bed of the dilute phase 8 thereof is small. Any carbon monoxide that does enter the dilute phase 8 of the bed will tend to undergo after burning with any excess oxygen here and in the cyclone separators 20 and 28 that are operated continuously throughout the operation of the regenerator 2 so as to feed back catalyst from the dilute phase to the dense phase of the fluidised bed. Normally, the dense phase of the bed will be operated at a temperature in the range 700—750°C.

In order to supply the air necessary to maintain these uniform combustion conditions, the air blower 46 is operated at an appropriate rpm and the balancing valves 42 and 44 are set so as to give uniform conditions throughout the dense phase of the bed. Whether there is a need to supply oxygen from the oxygen supply main 48 will depend on whether the air supply system is able to cope with the demands placed on it. As has been aforementioned, over recent years there has been a tendency to increase the demands placed on regenerators such as those shown in Figures 1 and 2. In other words, there has been a demand for the catalytic cracking plant of which the illustrated regenerator forms a part to increase either its throughput of hydrocarbon feedstock for cracking or to deal with heavier feedstock (for example, instead of receiving, say, vacuum gas oil the plant is required to crack a mixture of vacuum gas oil and a heavier residue). If, as is normal, the reactor is operated at a constant temperature, increasing the throughput of hydrocarbon will decrease the percentage conversion unless the ratio of catalyst to feed that is employed in the reactor can be maintained even if there is no loss of activity of the catalyst. In order to maintain catalyst activity it is necessary to maintain the total burn and therefore to increase the rate at which air is supplied to the regenerator 2 in order to cater for the greater amount of coke on the catalyst that is fed to the regenerator 2 per unit time. The balancing valves 42 are therefore opened wider to allow the extra air to flow through. (Since only about 5—15% of the total air entering the fluidised bed enters through the distributors 18, the setting of the balancing valves 44 controlling the air flow to these distributors is less critical.) Indeed, it has been found that in practice the valves 42 have in some instances had to be fully opened in order to meet the total requirements for air in the bed. It is at this stage that differential or uneven flows along the conduits 36(a), 36(b) and 36(c) will become critical. Such uneven flows may be caused by blockages in one or more of the air distributors 16 or by different pressure drops therealong or by a combination of both factors. It has been found in practice that a situation may be reached in which, with the balancing valves 42 fully open, the air supply to one part of the bed say through the distributor 16(a) is inadequate to maintain the necessary "total burn" oxidation conditions in the part of the bed served by that distributor while the total rate of supply of air would otherwise be adequate to maintain total burn conditions. This means that the rate of supply to at least one of the distributors 16(b) and 16(c) is above the minimum necessary to maintain total burn in the parts of the beds served by these two distributors. There are two main consequences of this phenomenon. First, some catalyst particles returned to the reactor from the regenerator will have a residual coke level significantly greater than 0.05% by weight of carbon on its surfaces and thus have a lower activity. Second, there will be a greater degree of afterburn in cyclones which in consequence of the localised variations in the combustion conditions in the dense phase of the bed draw in increased quantities of both carbon monoxide and oxygen. This phenomenon can create excessive temperature increases in the cyclones concerned (e.g. in the order of 50°C) and may give rise to permanent loss of activity of the catalyst subjected to this high temperature rise. Loss of catalyst activity whatever its cause would tend to exacerbate loss of conversion in the reactor and increase yet further the demands on the regenerator giving rise to a substantial operating problem.

The selective enrichment in oxygen of the air supplied to one or more of the distributors 16 in accordance with the present invention enables the above mentioned problem to be ameliorated. Suppose it is found from analysis of the temperature and composition of the gas leaving each of the cyclones 28 that at the desired hydrocarbon throughput rate in the reactor the air flow through the distributor 16(a) is some 5,000 standard cubic feet per hour less than it should be while that through the distributor 16(b) is substantially that required to provide total burn conditions and that through the distributor 16(c) is some 5,000 cubic feet per hour in excess of the minimum rate required to maintain total burn conditions in the part of the regenerator that it serves. In such an instance, oxygen is supplied to the air supply conduit 36(a) at a rate in the order of 1,100 standard cubic feet per hour from the oxygen supply conduit 50(a) and the balancing valve 42(a) reset so as to reduce the flow of air therethrough in order to re-establish uniform total burn throughout the dense phase 6 of the bed 4. Moreover, by supplying oxygen above the minimum rate required to re-establish such uniform conditions, it may be possible to increase the percentage conversion obtained in the reactor by giving an improvement in catalyst activity over that previously obtained when uniform conditions were achieved in the dense phase 6 of the bed 4. Thus, oxygen might be supplied to the air supply conduit 36(b) at a rate substantially less than that at which oxygen is supplied to the conduit 36(a). However, no oxygen is supplied to conduit 36(c). It is therefore to be appreciated that there is a differential oxygen-enrichment applied to each of the conduits 36(a) to 36(c) and accordingly a far more effective utilization of oxygen may be achieved in accordance with the present invention in order to overcome or reduce problems regarding non-uniform combustion conditions in the dense phase of the bed 4 than could be achieved by the mere enrichment in oxygen of the air in the main 34.

If desired, the oxygen flow control valves 52 may be controlled automatically by means of, for example, devices for monitoring, say, the oxygen concentration in the flue gas leaving the respective cyclones 28. The relationship between such oxygen concentration (and other parameters such as the exhaust temperature and carbon monoxide concentration) associated with each resepective cyclone on the one hand, and the flow rate of oxygen molecules into the dense phase through each respective main air distributor on the other hand may be determined empirically and an automatic control system calibrated accordingly in order to maintain oxygen flows into the dense phase such that substantially uniform combustion conditions are maintained in the dense phase. The control system will typically include an override which limits the maximum degree of oxygen enrichment which can be obtained in any one distributor. Typically this limit will prevent any local oxygen concentration greater than say 27% by volume from being created.

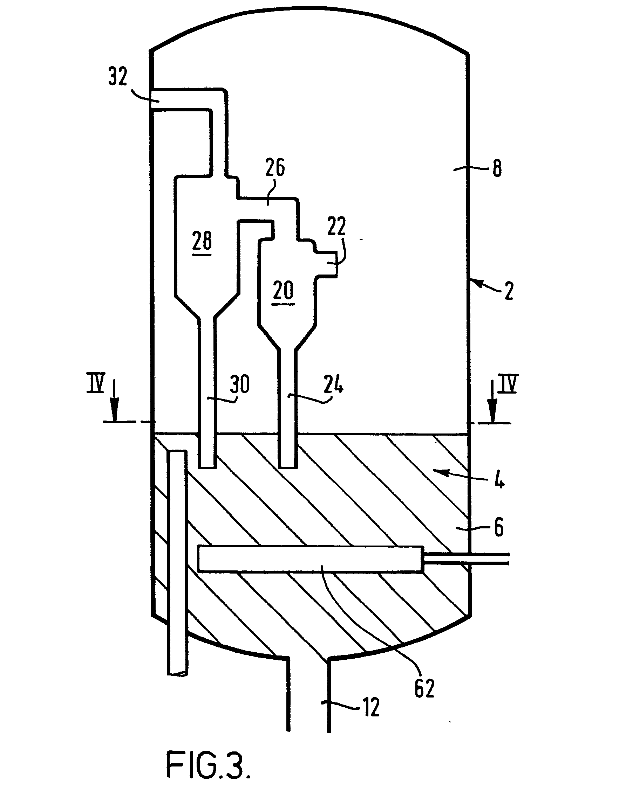

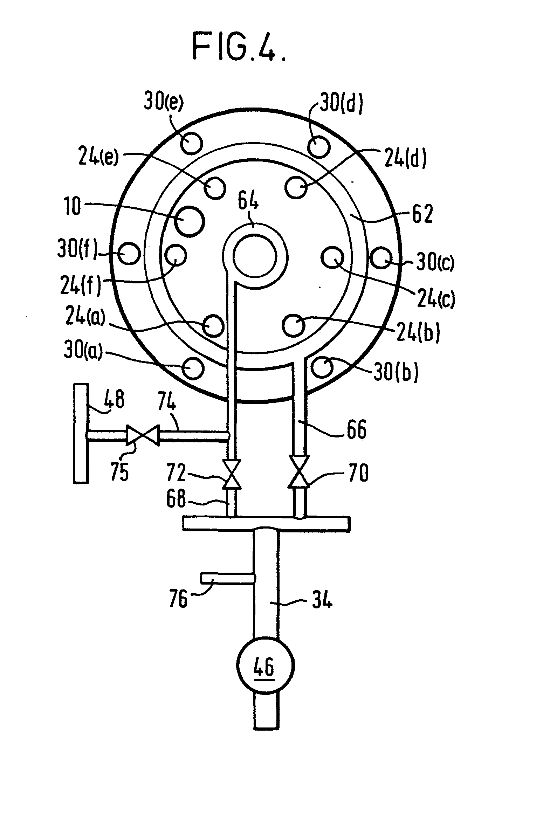

Figures 3 and 4 illustrate the regenerator of a different kind of catalytic cracking plant. For convenience of reference, parts of the regenerators respectively shown in Figures 1 and 2 on the one hand, and Figures 3 and 4, on the other hand, are indicated by the same reference numerals.

There are three main differences in the construction of the plant shown in Figures 3 and 4 of the accompanying drawings from that of the plant shown in Figures 1 and 2. A first difference is that the catalyst inlet pipe 10 enters the regenerator shown in Figures 3 and 4 at a location near its bottom. This is because the regenerator shown in Figures 3 and 4 is associated with a reactor (not shown) which is located side-by-side with the regenerator rather than above it as in the example described with reference to Figures 1 and 2. A second main difference is that instead of employing three main air distributors that extend arcuately and three similar secondary air distributors as shown in Figures 1 and 2, the regenerator shown in Figures 3 and 4 has a single annular main air distributor 62 and a single secondary air distributor 64. There is in consequence a different air supply system. The air main 34 communicates with two air conduits 66 and 68. The air conduit 66 terminates in the distributor 62 and the air conduit 68 terminates in the distributor 64. Typically, air flow control valves 70 and 72 are located in the conduits 66 and 68 respectively.

The third difference between the regenerator shown in Figures 3 and 4 and that shown in Figures 1 and 2 resides in the oxygen supply system. There is no oxygen supply conduit to enrich in oxygen the air flowing through the conduit 66 in operation of the plant shown in Figures 3 and 4 but there is a conduit 74 with flow control valve 75 disposed therealong for such enrichment of the air flowing through the conduit 68. If desired, there may also be an oxygen conduit 76 terminating in the air main 34 to allow some bulk enrichment of the air to take place.

The operation of the plant shown in Figures 3 and 4 is different from that shown in Figures 1 and 2 in that so called "total burn" conditions are not obtained in the regenerator 2 of the plant shown in Figures 3 and 4. Instead, the regenerator is operated so as to return catalyst to the reactor with say 0.2% by weight residual coke. (Typically, this will involve operating the regenerator at a temperature in the range 650 to 700°C). It is however desirable to maintain this residual coke level throughout the operation of the plant. It has been found that in plants of this type, as the flow rate of feedstock into the reactor (not shown) is increased or as it becomes of a heavier hydrocarbon, so difficulties can arise in maintaining adequate combustion in the centre of the bed is that part of the bed is served by the distributor 64. In one example it has been found necessary to shut down operation of the regenerator before inserting a second distributor 64 in order to obtain adequate combustion at the centre of the bed. Without such adequate combustion, there tends to be loss of catalyst activity in that region of the bed. This problem may be ameliorated or overcome in accordance with the present invention by enriching in oxygen the air flowing through conduit 18 in operation of the regenerator shown in Figures 3 and 4. Since the total flow of air through the distributor 64 is typically only 5—15% of that flowing through the distributor 62, the quantities of oxygen required are relatively small compared with the total air flow through the plant and can readily be met in general from a storage vessel containing the oxygen in a liquid state. By supplying oxygen to the inner distributor 64 at a rate controlled by the setting of valve 75 problems in obtaining a desired degree of oxidation of the residual coke on the catalyst in the region of the bed where fluidisation is maintained by this air may be overcome without having to shut down the plant for prolonged period of time necessary for enabling a new distributor 64 to be fitted. If desired, the air in the main 34 may additionally be enriched in oxygen. This will mean that the air streams supplied through the distributor 62 and 64 will both be enriched in oxygen, but the degree of oxygen enrichment in the air supplied to the latter distributor will be greater than that supplied to the former.

## Claims

1. A process for the regeneration of coke-contaminated catalyst, comprising:

(a) supplying coke-contaminated catalyst to elevated temperature fluidised catalyst undergoing regeneration, said fluidised catalyst being dispersed in a relatively dense phase and a relatively dilute phase, and said coke-contaminated catalyst being supplied to the dense phase;

(b) withdrawing regenerated catalyst from the relatively dense phase;

(c) passing air from a common main to a plurality of conduits to form a plurality of air streams free of catalyst, and distributing the air streams to the said realtively dense phase so as to maintain the fluidisation of the catalyst and to supply oxygen for supporting combustion of said coke;

(d) enriching at least one of the said air streams in oxygen; and

(e) controlling the rate of supply of each said air stream to said dense phase, and controlling the concentration of oxygen in the oxygen-enriched air stream or in at least one of the oxygen-enriched air streams independently of the other oxygen-enriched air streams.

2. A process as claimed in Claim 1, in which not all the air streams are enriched in oxygen.

3. A process as claimed in Claim 1 or Claim 2, in which there are a plurality of main air streams and at least one subsidiary air stream, and at least one of the main air streams is enriched in oxygen.

4. A process as claimed in Claim 3, in which two or more main air streams are enriched in oxygen by different amounts.

5. A process as claimed in Claim 3, or Claim 4, in which not all the main air streams are enriched in oxygen.

6. A process as claimed in Claim 3, in which the subsidiary air stream or at least one of the subsidiary air streams is enriched in oxygen.

7. A process as claimed in any one of the preceding claims, additionally including the steps of detecting non-uniform combustion conditions in said dense phase, and controlling the oxygen enrichment so as to restore uniform combustion conditions.

8. Apparatus for the regeneration of a coke-contaminated catalyst, comprising:

(a) a regenerator vessel;

(b) a common main for passing air to a plurality of air conduits (each of which conduits ends inside the regenerator) for distributing air to a fluidised catalyst to maintain in a fluidised state a relatively dense phase of the catalyst and a

(c) means for feeding coke-contaminated catalyst to said relatively dense phase.

(d) means for withdrawing regenerated catalyst from said relatively dense phase;

(e) means for passing oxygen or oxygen-enriched air into at least one of the air conduits; and

(f) means for controlling the rate of supply of air for each of said air supply conduits to said relatively dense phase, and means for controlling the rate of passage of oxygen or oxygen-enriched air into at least one of the air conduits independently of the control of any oxygen or oxygen-enriched air passed into any of the other air conduits.

9. Apparatus as claimed in Claim 8, in which there are two or more primary air supply conduits each ending in its own distributor of air, at least one subsidiary air conduit ending in its own distributor, and means for supplying oxygen or oxygen-enriched air to each primary air conduit, each such means having a control valve associated with it such that the rate at which oxygen or oxygen-enriched air is supplied to any one primary air supply conduit and hence main distributor can be set at a different rate from that at which oxygen or oxygen-enriched air is supplied to the other main distributor or distributors.

10. Apparatus as claimed in Claim 9, in which each said control valve is automatically operable in response to means for detecting non-uniform combustion conditions in said bed.

11. Apparatus as claimed in Claim 10, in which there are two or more primary air supply conduits each ending in its own distributor of air, at least one subsidiary air conduit ending in its own distributor, and means for supplying oxygen or oxygen-enriched air to at least one of the subsidiary air conduits.

## Patentansprüche

1. Verfahren zur Regenerierung eines durch Koks verunreinigten Katalysators, bei dem

(a) ein durch Koks verunreinigter Katalysator einem eine hohe Temperatur aufweisenden, einer Regenerierung unterworfenen fluidisierten Katalysator zugeführt wird, der in eine relativ dichte Phase und eine relativ verdünnte Phase verteilt ist, und wobei der durch Koks verunreinigte Katalysator der dichten Phase zugeführt wird,

(b) der regenerierte Katalysator der relativ dichten Phase entnommen wird,

(c) Luft von einer gemeinsamen Hauptleitung einer Vielzahl von Leitungen zugeführt wird, um

EP 0 181 108 B1

eine Vielzahl von Luftströmungen zu erzeugen, die frei vom Katalysator sind, und die Luftströme zu der relativ dichten Phase derart verteilt werden, daß die Fluidisierung des Katalysators aufrechterhalten wird und zur Unterstützung der Verbrennung des Kokses Sauerstoff zugeführt wird,

(d) zumindest einer der Luftströme mit Sauerstoff angereichert wird, und

(e) die Zufuhrmenge oder -geschwindigkeit eines jeden der dichten Phase zugeführten Luftstroms gesteuert bzw. geregelt wird, und die Sauerstoffkonzentration in dem mit Sauerstoff angereicherten Luftstrom oder in zumindest einem der mit Sauerstoff angereicherten Luftströme unabhängig von den anderen mit Sauserstoff angereicherten Luftströmen gesteuert bzw. geregelt wird.

2. Verfahren nach Anspruch 1, bei dem nicht alle der Luftströme mit Sauserstoff angereichert werden.

3. Verfahren nach Anspruch 1 oder 2, bei dem eine Vielzahl von Hauptluftströmen und zumindest ein Hilfsluftstrom vorgesehen sind, und bei dem zumindest einer der Hauptluftströme mit Sauerstoff angereichert wird.

4. Verfahren nach Anspruch 3, bei dem zwei oder mehr Hauptluftströme mit underschiedlichen Mengen von Sauerstoff angereichert werden.

5. Verfahren nach Anspruch 3 oder 4, bei dem nicht alle der Hauptluftströme mit Sauerstoff angereichert werden.

6. Verfahren nach Anspruch 3, bei dem der Hilfsluftstrom oder zumindest einer der Hilfsluftströme mit Sauerstoff angereichert wird.

7. Verfahren nach einem oder mehreren der vorhergehenden Ansprüche, das zusätzlich die Schritte der Erfassung uneinheitlicher Verbrennungsbedingungen in der dichten Phase sowie einer der Steuerung bzw. Regelung der Sauerstoffanreicherung zur Wiederherstellung einheitlicher Verbrennungsbedingungen umfaßt.

8. Vorrichtung zum Regenerieren eines durch Koks verunreinigten Katalysators mit:

(a) einem Regeneratorbehälter,

(b) einer Hauptleitung für die Zufuhr von Luft zu einer Vielzahl von (jeweils in dem Regenerator mündenden) Luftleitungen zur Verteilung von Luft an einen fluidisierten Katalysator, um in einem fluidisierten Zustand eine relativ dichte Phase des Katalysators aufrechtzuerhalten, und

(c) einer Vorrichtung zur Abgabe eines durch Koks verunreinigten Katalysators an die relativ dichte Phase,

(d) einer Vorrichtung zur Entnahme des regenerierten Katalysators von der relativ dichten Phase,

(e) einer Vorrichtung für die Zufuhr von Sauerstoff oder mit Sauerstoff angereicherter Luft in zumindest eine der Luftleitungen, und

(f) einer Vorrichtung zur Steuerung oder Regelung der Menge oder Geschwindigkeit der Luftzufuhr für jeden der Luftversorgungskanäle zu der relativ dichten Phase, und mit einer Vorrichtung zum Steuern oder Regeln der Zufuhrmenge oder -geschwindigkeit von Sauerstoff oder mit Sauerstoff angereicherter Luft in zumindest eine der Luftleitungen unabhängig von der Steuerung bzw. Regelung des Sauerstoffs oder der mit Sauerstoff angereicherten Luft, der bzw. die irgendeiner der anderen Luftleitungen zugeführt wird.

9. Vorrichtung nach Anspruch 8, bei der zwei oder mehrere Primärluftversorgungsleitungen jeweils in ihren eigenen Luftverteiler münden, zumindest eine Hilfsluftleitung in ihren eigenen Luftverteiler mündet, und Vorrichtungen für die Zufuhr von Sauerstoff oder mit Sauerstoff angereicherter Luft zu jeder Primärluftleitung vorgesehen sind, wobei jede solche Vorrichtung ein Steuerventil umfaßt, das dieser derart zugeordnet ist, daß die Menge bzw. Geschwindigkeit, mit der Sauserstoff oder mit Sauerstoff angereicherte Luft irgendeiner Primärluftversorgungsleitung und damit dem Hauptverteiler zugeführt wird, abweichend von der Menge bzw. Geshwindigkeit einstellbar ist, mit der Sauerstoff oder mit Sauerstoff angereicherte Luft dem anderen Hauptverteiler oder den anderen Hauptverteilern zugeführt wird.

10. Vorrichtung nach Anspruch 9, bei der jedes Steuerventil automatisch in Abhängigkeit von einer Vorrichtung betätigbar ist, die uneinheitliche Verbrennungsbedingungen in dem Bett erfaßt.

11. Vorrichtung nach Anspruch 10, bei der zwei oder mehrere Primärluftversorgungsleitungen jeweils in ihren eigenen Luftverteiler münden, zumindest eine Hilfsluftleitung in ihren eigenen Verteiler mündet, und eine Vorrichtung vorgesehen ist, um Sauerstoff oder mit Sauerstoff angereicherte Luft zumindest einer der Hilfsluftleitungen zuzuführen.

## Revendications

1. Procédé pour la régénération d'un catalyseur contaminé par du coke, ce procédé comprenant:

(a) l'acheminement d'un catalyseur, contaminé par du coke, vers du catalyseur fluidisé à température élevée et soumis à régénération, ledit catalyseur fluidisé étant dispersé en une phase relativement dense et en une phase relativement diluée, et ledit catalyseur contaminé par du coke étant acheminé vers la phase dense;

(b) l'enlèvement, par soutirage de la phase relativement dense, de catalyseur régénéré;

(c) le passage d'air d'un conduit principal ou collecteur commun vers plusieurs conduits pour former plusieurs courants d'air dépourvus de catalyseur, et la distribution des courants d'air vers ladite phase relativement dense afin de maintenir la fluidisation du catalyseur et de fournir l'oxygène pour entretenir la combustion dudit coke;

(d) l'enrichissement en oxygène d'au moins l'un desdits courants d'air; et

(e) le réglage du débit de fourniture de chacun desdits courants d'air à ladite phase dense et le réglage de la concentration de l'oxygène dans le courant d'air enrichi en oxygène ou dans au moins l'un des courants d'air enrichis en oxygène, indépendamment des autres courants d'air enrichis en oxygène.

2. Procédé tel que revendiqué à la revendication 1, dans lequel tous les courants d'air ne sont pas enrichis en oxygène.

3. Procédé tel que revendiqué à la revendication 1 ou à la revendication 2, dans lequel il existe plusieurs courants d'air principaux et au moins un courant d'air subsidiaire, et dans lequel au moins l'un des courants d'air principaux est enrichi en oxygène.

4. Procédé tel que revendiqué à la revendication 3, dans lequel deux ou plusieurs courants d'air principaux sont enrichis en oxygène en différentes quantités.

5. Procédé tel que revendiqué à la revendication 3 ou la revendication 4, dans lequel les courants d'air principaux ne sont pas tous enrichis en oxygène.

6. Procédé tel que revendiqué à la revendication 3, dans lequel le courant d'air auxiliaire ou subsidiaire ou au moins l'un des courants d'air subsidiaires est enrichi en oxygène.

7. Procédé tel que revendiqué dans l'une quelconque des revendications précédentes, comprenant en outre les étapes consistant à déceler des conditions de combustion non-uniforme dans ladite phase dense, et à régler l'enrichissement en oxygène de façon à restaurer des conditions de combustion uniforme.

8. Appareil pour la régénération d'un catalyseur contaminé par du coke, cet appareil comprenant:

(a) un récipient de régénération, ou régénérateur;

(b) un conduit commun, ou collecteur, pour faire passer l'air vers plusieurs conduits d'air (chacun de ces conduits débouchant à l'intérieur du régénérateur) pour distribuer l'air à un catalyseur fluidisé afin de maintenir à l'état fluidisé une phase relativement dense du catalyseur, et

(c) un moyen pour acheminer du catalyseur, contaminé par du coke, vers ladite phase relativement dense;

(d) un moyen pour soutirer, de ladite phase relativement dense, du catalyseur régénéré;

(e) un moyen pour faire passer de l'oxygène, ou de l'air enrichi en oxygène, dans au moins l'un des conduits d'air; et

(f) un moyen pour régler le débit d'alimentation en air, pour chacun desdits conduits d'alimentation en air menant à ladite phase relativement dense, et un moyen pour régler le débit de passage de l'oxygène, ou de l'air enrichi en oxygène dans au moins l'un des conduits d'air, indépendamment de la commande de n'importe quel passage d'oxygène, ou d'air enrichi en oxygène, introduit dans l'un quelconque des autres conduits d'air.

9. Appareil tel que revendiqué à la revendication 8, dans lequel il existe deux ou plusieurs conduits d'alimentation en air primaire, chacun débouchant dans son propre distributeur d'air, au moins un conduit d'air auxiliaire ou subsidiaire débouchant dans son propre distributeur, et un moyen pour fournir de l'oxygène, ou de l'air enrichi en oxygène, à chaque conduit d'air primaire, chacun de ces moyens comportant une vanne de commande qui lui est associée de façon à permettre de régler le débit auquel l'oxygène, ou de l'air enrichi en oxygène, est fourni à l'un quelconque des conduits d'alimentation en air primaire et donc au distributeur principal, à un débit différent de celui auquel l'oxygène, ou l'air enrichi en oxygène, est fourni à l'autre ou aux autres distributeurs principaux.

10. Appareil tel que revendiqué à la revendication 9, dans lequel ladite vanne de commande peut être actionnée automatiquement en réponse à l'action d'un moyen destiné à déceler dans ledit lit des conditions d'une combustion non uniforme.

11. Appareil tel que revendiqué à la revendication 10, dans lequel il existe deux ou plusieurs conduits d'alimentation en air primaire, chacun débouchant dans son propre distributeur d'air, au moins un conduit d'air subsidiaire débouchant dans son propre distributeur, et un moyen pour fournir de l'oxygène, ou de l'air enrichi en oxygène, à l'un au moins des conduits d'air subsidiaire.

FIG.1.

FIG.2.

FIG.3.

# FIG.4.